# EUROPEAN PATENT APPLICATION

(11) **EP 3 165 898 A1**
(43) Date of publication of application: **10.05.2017**
(21) Application number: 15814218.2
(22) Date of filing: 26.06.2015
(51) Int. Cl.: G01N 15/02, B03C 3/68, B03C 7/02, G01N 1/02, G01N 27/60, H01T 23/00

(54) **PARTICLE CHARGING DEVICE AND PARTICLE CLASSIFICATION DEVICE USING SAID CHARGING DEVICE**

(30) Priority: 04.07.2014 JP 2014138898
(71) Applicant: Shimadzu Corporation, Kyoto-shi, Kyoto 604-8511 (JP); National Institute of Advanced Industrial Science and Technology, Tokyo 100-8921 (JP)
(72) Inventor: OKUDA, Hiroshi, Kyoto-shi Kyoto 604-8511 (JP); UENO, Yoshihiro, Kyoto-shi Kyoto 604-8511 (JP); SEKI, Hiroshi, Kyoto-shi Kyoto 604-8511 (JP); SAKURAI, Hiromu, Tsukuba-shi Ibaraki 305-8563 (JP)
(74) Representative: Webster, Jeremy Mark
(86) International application number: PCT/JP2015/068467
(87) International publication number: WO 2016/002647

(57) **Abstract**

In unipolar charging, a discharge current value at which charging efficiency is best and a discharge current dependency of multivalent charging differ depending on the particle size of the particles that are the object of charging. Therefore, for each particle size, a discharge voltage at which univalent charging efficiency is best and a discharge voltage at which the signal-to-noise ratio of a signal when particles of a different size are regarded as noise is best are obtained through experiment and stored in a storage unit (21). When scanning a classification voltage that is applied to a classification unit (32) of a DMA (3) to measure particle size distribution, a system controlling unit (2) acquires an optimal voltage corresponding to a particle size from the storage unit (21), and in conjunction with scanning of the classification voltage, controls a discharge power source (11) via a discharge voltage controlling unit (10) so that the discharge voltage is scanned in accordance with changes in particle size. It is thereby possible, for example, to reduce the amount of multivalent charged particles of different particle sizes that are mixed in with particles with a predetermined particle size that are extracted by classification, and to accurately determine the particle size distribution.

## Description

### TECHNICAL FIELD

The present invention relates to a particle charging device that charges fine particles suspended in gas, and a particle classification device that separates fine particles charged by the particle charging device according to the particle sizes to make measurement and to collect fine particles with a specific particle size.

### BACKGROUND ART

Tiny solid and/or liquid particles suspended in a gas are generally referred to as "aerosols". Most exhaust gases from automobile and pollutants contained in smoke emitted from factories are also aerosols, and the effects on health of particles having the particle size of less than 1 µm, or "nano-aerosols", is a subject of concern. For this reason, measurement of the particle sizes of aerosols as well as measurement of the particle size distribution is very important in the fields of environmental measurements and evaluation, for example. A differential mobility analyzer (DMA) that classifies fine particles by utilizing differences in the movement speed (electrical mobility) of charged fine particles in an electric field is widely used as an apparatus for measuring the particle size distribution of aerosols (see Patent Literature 1).

When performing measurement using a DMA, it is necessary to electrically charge the particles (aerosols) that are the measurement objects prior to the measurement. Various devices of different working principles have conventionally been used for that purpose. One type of charging device that has long been used for this purpose uses radioactive rays such as alpha rays emitted from americium (Am) or beta rays emitted from krypton (Kr) in an ion source, and makes ions generated in the ion source to contact objective particles to thereby electrically charge the particles (see Non-Patent Literature 1). Such a device is also referred to as a "bipolar diffusion neutralizer" or simply a "neutralizer".

However, because the aforementioned kind of charging device uses a radiation source, for safety it is necessary to exercise much care when handling the device, and consequently there is a problem that the charging device has poor portability. Therefore, in recent years, charging devices that have ion sources utilizing electrical discharge, such as corona discharge, are more often used instead. Hereunder, in the present specification, unless explicitly stated otherwise, a particle charging device is described that utilizes electrical discharge as an ion source.

In the aforementioned particle charging device, for example, as described in Patent Literature 2, appropriate carrier gas molecules are ionized by electrical discharge such as corona discharge, and the generated ions are brought into contact with the particles that are the charging object to thereby electrically charge the particles. The charging methods performed using such a charging device are broadly classified into two methods: one is a bipolar charging method that utilizes a bipolar discharge to generate charged particles having both positive and negative charges, and the other is a unipolar charging method that utilizes a unipolar discharge to generate charged particles having either one polarity among a positive charge and a negative charge.

In the bipolar charging method, normally, charges of equilibrium charge distribution which is electrically stable are imparted to the charged particles (therefore "bipolar charging" is generally called as "bipolar equilibrium charging"). According to this charging method, it is possible to almost unambiguously determine the charging efficiency of charged particles with a certain particle size that have a specific valence. Consequently the advantage is that calculation of the original particle size distribution based on the numbers of particles that are counted after classification by the DMA is comparatively easy. Another advantage is that, in the bipolar charging method, there is little occurrence of multivalent charging that generates particles with two or more valences. On the other hand, in the bipolar charging method the charging efficiency is low with respect to particles especially with a small particle size. Because particles not charged in the charging device are excluded from the objects of classification by electrical mobility or of collection utilizing electrostatic force, there is a problem that the analytical sensitivity is low when the charging efficiency is low.

In comparison to the bipolar charging method, the unipolar charging method offers the advantage of a sufficiently high charging efficiency with respect to particles with a small particle size. On the other hand, because the surface area of particles with a large particle size is large and there are more opportunities for contact with ions in comparison to the particles with a small particle size, multivalent charging is liable to occur. Since the electrical mobility of a charged particle is approximately in inverse proportion to the particle size of the charged particle as well as in proportion to charges, there is a possibility that the electrical mobility will be approximately the same between particles with a multivalent charge that have a large particle size and particles with a small particle size that have a smaller valence. When it is attempted to classify charged particles according to electrical mobility in a state in which such particles are mixed, differences between the particle sizes will not be distinguishable. As a result, even if it is attempted to utilize classification to collect particles with a specific particle size, there is a risk of a large amount of particles with a size other than the target particle size being mixed therein.

### CITATION LIST

### PATENT LITERATURE

[Patent Literature 1] JP 4905040 B
[Patent Literature 2] JP 2007-305498 A

### NON PATENT LITERATURE

[Non Patent Literature 1] Sato, Sakurai, Ehara, "The Relation between the Charged Fractions of the Aerosol Charge Neutralizer and the Time Change of the Ion Mobility", Journal of the Institute of Electrostatics Japan, Vol. 35, No. 1, 2011, pp.14-19

### SUMMARY OF INVENTION

### TECHNICAL PROBLEM

Although the conventional particle charging device performing unipolar charging has an advantageous in improvement of the overall charging efficiency compared with a case of performing bipolar charging, it is difficult to collect particles with a uniform particle size due to multivalent charging of particles with a large particle size. Further, the occurrence of multivalent charging means that the univalent charging efficiency decreases correspondingly, and this also leads to a decrease in sensitivity with respect to measurement of univalent charged particles.

The present invention has been made to solve the problem described above, and a principal object of the present invention is to provide a particle charging device that can suppress the influence of particles that underwent multivalent charging by decreasing a proportion of particles that are subjected to multivalent charging while maintaining a high charging efficiency, and can achieve high measurement accuracy and a high collection efficiency with respect to particles with a specific particle size, as well as a particle classification device that uses the particle charging device.

### SOLUTION TO PROBLEM

The charging efficiency of particles in the particle charging device as described above normally depends on a product of the concentration (quantity) of ions generated by electrical discharge, and the duration of contact between ions and particles that are the objects to be charged. Therefore, when the duration of contact between ions and particles is the same, the overall charging efficiency will increase as the ion concentration increases, but, at the same time, multivalent charging is liable to occur especially in the case of particles with a large particle size because they have more chances of contact with ions. Therefore, with respect to particles with different particle sizes, the present inventors conducted experiments to investigate the occurrence rate of charging of respective valences when the intensity of discharge current, which affects the ion concentration, was varied. As a result it was revealed that the intensity of discharge current at which the charging efficiency is the best depends on the particle size of the particles for each valence, and when charging particles with a large particle size, compared to charging particles with a relatively small particle size, the charging efficiency with respect to a univalent charge can be increased more by lowering the intensity of discharge current. The present invention has been made based on these experimental findings.

A particle charging device according to the present invention, which has been made to solve the above described problem, in order to generate charged particles to be provided for classification of particles in a gas utilizing electrical mobility, ionizes a predetermined gas by electrical discharge generated from a discharge electrode, and causes the ions and particles that are charging objects to contact to electrically charge the particles, the particle charging device including:
a) a discharge voltage application unit that applies a voltage for causing electrical discharge to the discharge electrode, and
b) a discharge controlling unit that controls the discharge voltage application unit to change a voltage that is applied to the discharge electrode so as to adjust a concentration of ions that are generated by the electrical discharge and contribute to charging of particles in accordance with a particle size of charged particles taken as a target.

The particle charging device according to the present invention can typically be utilized to generate charged particles (charged aerosols) to be supplied to a DMA. In that case, the aforementioned "particle size of charged particles taken as a target" is a particle size of charged particles which it is being attempted to extract by classification in the DMA.

In the particle charging device according to the present invention, corona discharge, arc discharge, spark discharge, dielectric barrier discharge and atmospheric pressure glow discharge or the like can be used as the electrical discharge. Naturally, the shape of a discharge electrode and the pattern of a voltage to be applied to the discharge electrode (for example, a voltage waveform such as a pulsed voltage or a sine-wave AC voltage, and a frequency) will differ depending on the kinds of these electrical discharges.

For example, in the case of a corona discharge-type charging device that includes an ion source that utilizes corona discharge, as described above, either one of unipolar charging and bipolar charging can be selectively performed depending on the polarity of a voltage applied to the discharge electrode. In the case of unipolar charging, a pulsed voltage of positive polarity or negative polarity is applied to the discharge electrode, and the quantity of ions that are generated, that is, the ion concentration, changes depending on the voltage value (pulse peak value) and the discharge duration.

Therefore, as a first specific form of the particle charging device according to the present invention, a configuration may be adopted in which:
to perform unipolar charging, the discharge voltage application unit generates ions of positive polarity or negative polarity by electrical discharge by applying a voltage of positive polarity or negative polarity to the discharge electrode, and
the discharge controlling unit controls the discharge voltage application unit to change at least one of an amplitude and a voltage application time of the voltage of positive polarity or negative polarity.

In the particle charging device according to the first specific form, specifically, for example, the relation between the particle size of particles and an appropriate voltage amplitude (or voltage application time) is investigated in advance through experiment and the result is stored. Subsequently, when an instruction is received regarding the particle size of charged particles taken as a target, the discharge controlling unit refers to the aforementioned stored information to determine a voltage amplitude that corresponds to the target particle size, and controls the discharge voltage application unit to apply a voltage having the aforementioned amplitude to the discharge electrode. By this means, for example, the ion concentration is adjusted so that the charging efficiency for univalent charging that is convenient for classification, and not the overall charging efficiency that includes multivalent charging, is best or is close to best. As a result, a large number of univalent charged particles can be obtained regardless of the particle size, and even in a case where charged particles generated in this manner are measured with a DMA, measurement of the particle size distribution can be performed with a high accuracy. Further, since the charging efficiency for unipolar charging is originally high in comparison to bipolar equilibrium charging, a greater amount of charged particles can be supplied to a DMA or the like, and high-sensitivity measurement can be realized.

Further, in a corona discharge-type particle charging device or the like, when performing bipolar equilibrium charging, a voltage of positive polarity and a voltage of negative polarity are alternately applied to the discharge electrode to set the discharge power ratio between positive and negative charges when applying the voltages at 1:1. If voltages that make the discharge power ratio deviate from 1:1 are applied to the discharge electrode, a positive-ion rich state emerges in which the quantity of positive ions is greater or a negative-ion rich state emerges in which the quantity of negative ions is greater, and bipolar charging having non-equilibrium charge distribution that is in accordance with the degree of unbalance between the positive and negative ions is possible. Such kind of bipolar charging that leads to non-equilibrium charge distribution (hereunder, referred to as "bipolar non-equilibrium charging") can also be regarded as an intermediate state between bipolar equilibrium charging and unipolar charging. When performing such bipolar non-equilibrium charging, for example, if voltages for which a discharge power ratio between the positive and negative powers at the time of voltage application deviates from 1:1 are applied to the discharge electrode, the concentration of positive ions or the concentration of negative ions can be adjusted. Further, the concentration of positive ions or the concentration of negative ions can be similarly adjusted by changing a pulsed voltage in which voltage amplitude values of both positive and negative polarities are equal or a direct current bias voltage (midpoint voltage) in an alternating-current voltage.

Therefore, as a second specific form of the particle charging device according to the present invention, a configuration may be adopted in which:
to perform bipolar charging in which charge distribution is equilibrium distribution or non-equilibrium distribution, the discharge voltage application unit generates ions of positive polarity and negative polarity by electrical discharge by applying an alternating-current voltage of both positive and negative polarities on which a direct current bias voltage is superimposed to the discharge electrode, and
the discharge controlling unit controls the discharge voltage application unit to change the direct current bias voltage.

Further, as a third specific form of the particle charging device of the present invention, a configuration may be adopted in which:
to perform bipolar charging in which charge distribution is equilibrium distribution or non-equilibrium distribution, the discharge voltage application unit generates ions of positive polarity and negative polarity by electrical discharge by alternately applying a voltage of positive polarity and a voltage of negative polarity to the discharge electrode, and
the discharge controlling unit controls the discharge voltage application unit to change a ratio between a discharge power produced by application of a voltage of positive polarity and a discharge power produced by application of a voltage of negative polarity.

As a fourth specific form of the particle charging device of the present invention, a configuration may be adopted in which:
as the discharge voltage application unit, the particle charging device includes two voltage application units that are used for applying a positive voltage and applying a negative voltage, wherein positive electrode discharge is performed by voltage application from the voltage application unit for applying the positive voltage, and negative electrode discharge is performed by voltage application from the voltage application unit for applying the negative voltage, and the discharge controlling unit controls the two voltage application units to change a power ratio between the two voltage application units.

According to the particle charging devices of the second, third and fourth specific forms, even when performing bipolar charging instead of unipolar charging, ion concentrations can be adjusted and charging conditions can be changed by changing a voltage that is applied for electrical discharge.

Further, as described above, although the overall charging efficiency is not very high, bipolar equilibrium charging has advantages of less multivalent charges and simple data processing for calculating the number of particles and the like. Therefore, a configuration may be adopted so that bipolar equilibrium charging can be utilized for particles with a large particle size with respect to which a relatively high charging efficiency is obtained in comparison to particles with a small particle size.

In the particle charging device according to the present invention, a configuration may be adopted in which:
to perform bipolar equilibrium charging, the discharge voltage application unit generates both ions of positive polarity and ions of negative polarity by an electrical discharge by applying a voltage of positive polarity and a voltage of negative polarity that are in positive and negative symmetry to the discharge electrode, and
the discharge controlling unit controls the discharge voltage application unit to generate a voltage that enables bipolar equilibrium charging, in place of unipolar charging or bipolar charging in which charge distribution is non-equilibrium distribution.

Further, in the particle charging device according to the present invention, preferably a configuration is adopted in which:
the discharge controlling unit has a signal amount priority mode and a signal quality priority mode as two charging modes that are switchable, and
in the signal amount priority mode, the discharge controlling unit controls the discharge voltage application unit to apply to the discharge electrode a voltage that is previously determined so that a generated amount of charged particles with a valence of one becomes a maximum with respect to a particle size of charged particles taken as a target, and in the signal quality priority mode, the discharge controlling unit controls the discharge voltage application unit to apply to the discharge electrode a voltage that is previously determined so that a signal-to-noise ratio that is determined based on a relation between a generated amount of charged particles with a valence of one with respect to a particle size of charged particles taken as a target and a generated amount of noise when other charged particles with a particle size that is different to the charged particles but for which electrical mobility is equal to the charged particles because of having a multivalent charge of two or more are regarded as the noise becomes a maximum.

When a discharge current amount is changed to particles with a certain particle size, the charging efficiency of univalent charging changes, and the charging efficiency of, for example, divalent charging also changes. Consequently, when electrical discharge conditions in which the charging efficiency of univalent charging becomes best are selected, even if the generated amount of univalent charged particles is a maximum, thereby the generated amount of divalent charged particles also increases, which may incur the aforementioned signal-to-noise ratio not being the best.

Contrary to this, according to the above described configuration, the signal amount priority mode can be selected in a case where it is desired to raise the sensitivity even if accuracy is sacrificed to some extent for a reason such as, for example, that the number of particles that are the object of measurement is originally small, while the signal quality priority mode can be selected in a case where, for example, it is desired to determine the number of particles with a specific particle size with a high degree of accuracy or it is desired to examine the particle size distribution with a high degree of accuracy with respect to a sample containing sufficient number of particles. In comparison to the signal amount priority mode, although in the signal quality priority mode the number of charged particles with respect to which particles with a certain particle size are univalently charged does not necessarily become a maximum, because generation of multivalent charged particles with a different particle size that have substantially the same electrical mobility as the particles with the certain particle size is suppressed, the signal quality priority mode is useful for classifying particles with a target particle size with a high purity.

Further, a particle classification device according to the present invention is a particle classification device that uses the above described particle charging device according to the present invention, comprising:
c) a classification electrode that forms an electric field for classifying the charged particles according to electrical mobility;
d) a classification voltage application unit that applies a classification voltage to the classification electrode;
e) a classification controlling unit that controls the classification voltage application unit to change a classification voltage in accordance with a particle size for which measurement is desired; and
f) an integrated controlling unit that, when changing a classification voltage by means of the classification controlling unit, links control by the classification controlling unit with control by the discharge controlling unit or controls operations of both of the controlling units so that a voltage applied to the discharge electrode changes in response to the change in the classification voltage.

In the particle classification device according to the present invention, for example, when measuring particle size distribution, the classification voltage application unit scans a classification voltage in a predetermined range under control of the classification controlling unit. Thereby, the classification electric field changes with the passage of time, and charged particles having different electric potential mobility are extracted in order. The integrated controlling unit causes the discharge controlling unit to operate so that a voltage applied to the discharge electrode changes in conjunction with scanning of the classification voltage. Specifically, in the particle charging device, at a time point when a predetermined time period has elapsed from a time point when a discharge voltage such that the charging efficiency for univalent charging of particles with a certain specific particle size becomes favorable is applied to the discharge electrode, a classification voltage is applied to the classification electrode such that the aforementioned charged particles with the specific particle size are extracted by classification. By previously setting, as the predetermined time period, a time period that is required for charged particles to move from a charging region in which particles are charged in the particle charging device to a classification region in which a classification electric field is formed, particles charged under appropriate conditions in the particle charging device can be extracted by the classification. This allows effective use of charged particles generated in the particle charging device in the classification, which improves for example, the accuracy and sensitivity of particle size distribution measurement. Further, in a case where it is desired to collect particles having a specific particle size, it is possible to collect a large amount of particles while raising the purity with respect to the particle size.

Further, for the above described reason, in the particle classification device according to the present invention, preferably a configuration is adopted in which the integrated controlling unit includes a delay time estimation unit that estimates a time taken for charged particles to move from a charging region in which particles are charged in the particle charging device to a classification region in which an electric field is formed by the classification electrode, and controls the classification controlling unit and the discharge controlling unit, taking into account the time estimated by the delay time estimation unit, so that a change in a classification voltage and a change in a discharge voltage link with each other.

In this case, the delay time estimation unit may estimate a time taken for charged particles to move, based on a flow rate or flow velocity of a gas that carries charged particles from the charging region to the classification region and an internal volume of a flow passage that is previously determined.

In a DMA or the like, usually, a flow rate or flow velocity of a gas that carries charged particles from a charging region to a classification region is one of the parameters that are set by the user. On the other hand, the internal volume of a flow passage is previously determined by the device structure. Therefore, after a flow rate or flow velocity is set by the user, the delay time estimation unit calculates a movement time of charged particles based on the set value and the predetermined internal volume. The integrated controlling unit performs the above described control for linking by using the calculated movement time. Therefore, even in a case where the flow rate or flow velocity of a gas that carries charged particles is changed, the device can be always controlled so that measurement or collection of particles is always appropriately performed in in response to the change.

### ADVANTAGEOUS EFFECTS OF INVENTION

According to the particle charging device and particle classification device of the present invention, multivalent charging can be suppressed with respect to particles having a relatively large particle size also, and a proportion of univalent charged particles can be increased. As a result, when extracting particles with a certain particle size by classification, mixture of undesired particles which have a different particle size from the certain particle size but have substantially the same electrical mobility as the particles with the certain particle size due to a multivalent charge can be suppressed, and for example the accuracy of particle size distribution can be increased and a high collection efficiency can be achieved with respect to the particles with the specific particle size.

### BRIEF DESCRIPTION OF DRAWINGS

Fig. 1 is an overall configuration diagram of an aerosol particle size distribution measurement device according to an embodiment of the present invention.
Fig. 2 is a schematic configuration diagram of a particle charging unit in the aerosol particle size distribution measurement device of the present embodiment.
Fig. 3A and Fig. 3B are show results in which of investigating through experiment a discharge current dependency of valence number distribution of charged particles are experimentally investigated, where Fig. 3A shows valence number distribution with respect to a particle size of 27 nm, and Fig. 3B shows valence number distribution with respect to a particle size of 38 nm.
Fig. 4A and Fig. 4B are waveform diagrams illustrating an example of discharge voltage control in a case of unipolar charging.
Fig. 5A and Fig. 5B are waveform diagrams illustrating an example of discharge voltage control in a case of bipolar charging.

### DESCRIPTION OF EMBODIMENTS

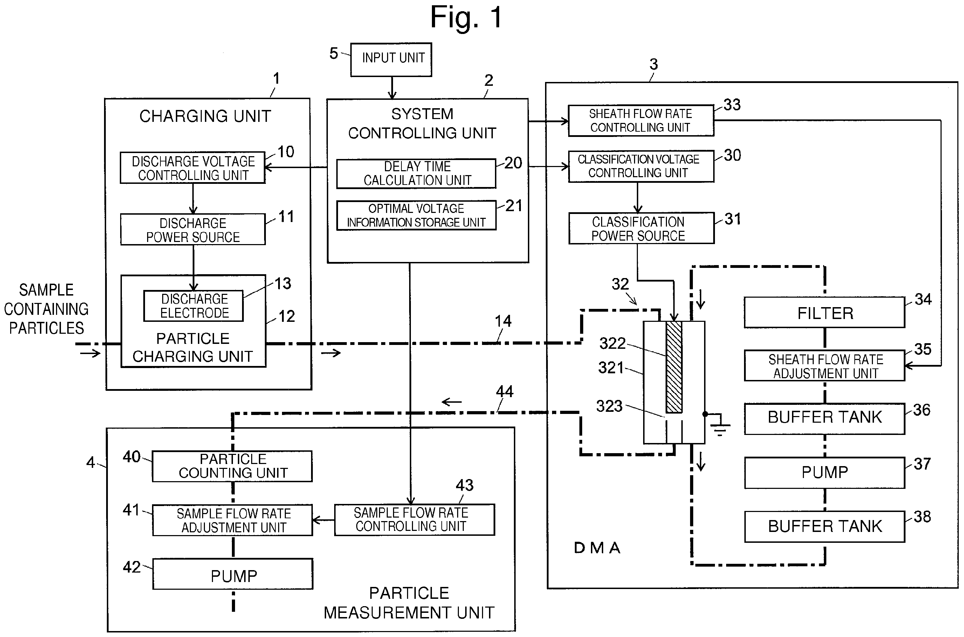

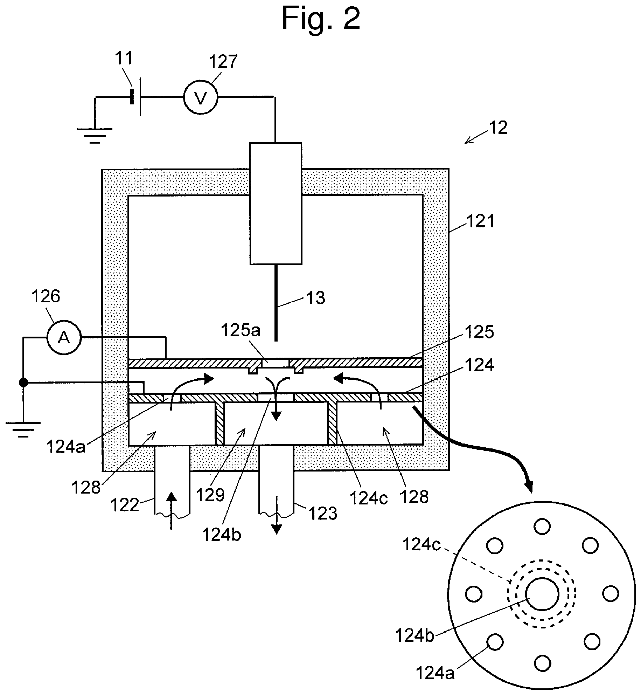

Hereunder, an aerosol particle size distribution measurement device as an embodiment of the present invention is described with reference to the accompanying drawings. Fig. 1 is an overall configuration diagram of an aerosol particle size distribution measurement device of the present embodiment. Fig. 2 is a configuration diagram of a particle charging unit included in the aerosol particle size distribution measurement device.

The aerosol particle size distribution measurement device according to the present embodiment includes: a charging unit 1 that electrically charges aerosols that are a measurement object to generate charged aerosols; a DMA 3 that classifies the charged aerosols according to electrical mobility; a particle measurement unit 4 that detects charged aerosols classified; and a system controlling unit 2 that integrally controls each of these units. In Fig. 1, alternate long and short dash lines shown in extra thick lines represent a flow of gas, and arrows shown in thick solid lines represent a flow of electrical signals.

The charging unit 1 includes a discharge voltage controlling unit 10, a discharge power source 11, and a particle charging unit 12 with which a discharge electrode 13 is provided.

The DMA 3 includes a classification voltage controlling unit 30, a classification power source 31 and a classification unit 32, as well as a filter 34, a sheath flow rate adjustment unit 35, buffer tank 36 and 38, and a pump 37 for circularly supplying sheath gas to the classification unit 32. The DMA 3 further includes a sheath flow rate controlling unit 33 that controls the sheath flow rate adjustment unit 35. The particle charging unit 12 of the charging unit 1 and the classification unit 32 of the DMA 3 are connected via a pre-classification particle conveyance flow passage 14. Charged aerosols are introduced to the classification unit 32 through the pre-classification particle conveyance flow passage 14.

The particle measurement unit 4 includes: a particle counting unit 40 that is constituted by a Faraday cup ammeter or the like; a sample flow rate adjustment unit 41 that adjusts the flow rate of a sample gas that flows to the particle counting unit 40 through the classification unit 32; a pump 42; and a sample flow rate controlling unit 43 that controls the sample flow rate adjustment unit 41. The classification unit 32 of the DMA 3 and the particle counting unit 40 of the particle measurement unit 4 are connected via a post-classification particle conveyance flow passage 44. Charged aerosols are introduced to the particle counting unit 40 through the post-classification particle conveyance flow passage 44.

The system controlling unit 2 includes a delay time calculation unit 20 and an optimal voltage information storage unit 21 as functional blocks characterized by the present device. An input unit 5 which is operated by an analyst is connected to the system controlling unit 2.

First, operations of the DMA 3 and the particle measurement unit 4 will be summarily described.

When the pump 37 operates in the DMA 3, sheath gas accumulated in the buffer tank 38 is sucked by the pump 37 and supplied to the buffer tank 36, and after being adjusted to a predetermined flow rate by the sheath flow rate adjustment unit 35, the sheath gas is supplied to the classification unit 32 through the filter 34. The sheath gas passed through the classification unit 32 returns to the buffer tank 38. By this means, sheath gas adjusted to a predetermined flow rate by the sheath flow rate adjustment unit 35 is circularly supplied continuously to the classification unit 32. The flow rate of the sheath gas is controlled by the sheath flow rate controlling unit 33 that receives instructions from the system controlling unit 2.

The classification unit 32 has a coaxial double cylindrical structure constituted by an outer cylinder unit 321 and an inner cylinder unit 322. Sheath gas is supplied into a space formed between the outer cylinder unit 321 and the inner cylinder unit 322 in an axial direction. The outer cylinder unit 321 is electrically grounded, while a direct-current voltage is applied to the inner cylinder unit 322 from the classification power source 31, thereby a classification electric field is formed between the outer cylinder unit 321 and the inner cylinder unit 322. The charged aerosols supplied through the pre-classification particle conveyance flow passage 14 are introduced into the flow of the sheath gas in which the classification electric field is formed.

The charged aerosols introduced into the space between the outer cylinder unit 321 and the inner cylinder unit 322 move (in Fig. 1, move in the downward direction from the top) in the flow of the sheath gas, and are affected by the action of the classification electric field so as to be attracted to the inner cylinder unit 322 side. Subsequently, charged aerosols having a specific electrical mobility in accordance with the intensity of the classification electric field pass through a slit 323 formed at the lower part of the inner cylinder unit 322 and are sent to the particle measurement unit 4 through the post-classification particle conveyance flow passage 44. When the classification voltage is changed for changing the intensity of the classification electric field, the electrical mobility of charged aerosols that can reach the position of the slit 323 changes in accordance with the change in the classification voltage. Thus, by scanning the classification voltage within a predetermined voltage range, the electrical mobility of charged aerosols that are supplied to the particle measurement unit 4 can be scanned.

The flow of sample gas that reaches the particle counting unit 40 from the classification unit 32 through the post-classification particle conveyance flow passage 44 is formed by operation of the pump 42 included in the particle measurement unit 4, and the flow rate of the sample gas is adjusted by the sample flow rate adjustment unit 41. In the particle counting unit 40, a detector such as a Faraday cup ammeter detects a current that flows by means of charges possessed by the charged aerosols which reached the particle counting unit 40. Measurement value data that is obtained by sampling detected signals at a predetermined sampling interval shows the number of particles having specific electrical mobility. When the classification voltage is scanned across the predetermined voltage range as described above, because the electrical mobility of the aerosols that reach the particle counting unit 40 changes, measurement value data that is derived from aerosols having different electrical mobility can be sequentially acquired with a lapse of time in the particle counting unit 40. A not shown data processing unit included in the particle counting unit 40 calculates a particle size distribution showing the relation between particle size and number of particles, by performing a predetermined operation with respect to electrical mobility distribution based on the measurement value data.

Note that, an algorithm for calculating such particle size distribution is exactly the same as the conventional algorithm, and hence a detailed description thereof is omitted.

Next, the configuration and operation of the charging unit 1 will be described in detail. The charging unit 1 is a particle charging device that utilizes an ion source based on corona discharge.

As shown in Fig. 2, the particle charging unit 12 of the charging unit 1 has a substantially cylindrical chamber 121 whose top face and bottom face are each circular. A sample gas discharge pipe 123 is connected at approximately the center of the bottom face of the chamber 121, while a sample gas introduction pipe 122 is connected on an outer circumferential side of the bottom face of the chamber 121. The sample gas discharge pipe 123 reaches the aforementioned pre-classification particle conveyance flow passage 14. An acicular discharge electrode 13 extending in a perpendicular downward direction from the top face is disposed in an internal space of the chamber 121. Further, a substantially disk-shaped ground electrode 124 that forms a pair with the discharge electrode 13 is disposed at a bottom part of the internal space of the chamber 121. The ground electrode 124 has a substantially cylindrical partition wall portion 124c on the underside thereof. A first space 128 to which the sample gas introduction pipe 122 is connected, and a second space 129 to which the sample gas discharge pipe 123 is connected are formed by the partition wall portion 124c. In the ground electrode 124, a plurality of first vent holes 124a are formed facing the first space 128, and a second vent hole 124b having a large diameter is formed facing the second space 129.

Furthermore, a substantially disk-shaped baffle plate 125 in which a circular opening 125a is formed at the center is mounted at a position separate at a predetermined interval to the upper side from the ground electrode 124 in the internal space of the chamber 121. A rib that extends downwards is formed around the circular opening 125a on the undersurface of the baffle plate 125. The baffle plate 125 constituted by a conductive material also serves as an ionic current detection electrode, and is connected to an ammeter 126 on the outside of the chamber 121. A predetermined voltage is applied from the discharge power source 11 to the discharge electrode 13, and the applied voltage is detected by a voltmeter 127 that is connected to the discharge electrode 13. The discharge voltage during electrical discharge can be monitored in real time by the voltmeter 127. Further, an ionic current that reflects the concentration of ions generated by corona discharge can be monitored in real time by the ammeter 126.

A sample gas including aerosols as a charging object is supplied to the first space 128 through the sample gas introduction pipe 122. The sample gas flows upward through the first vent holes 124a, and since the baffle plate 125 is located directly above the first vent holes 124a, the sample gas changes a direction and flows toward the center of the internal space of the chamber 121 as indicated by arrows in Fig. 2. Thereafter, the sample gas proceeds downward through the second vent hole 124b, and passes through the sample gas discharge pipe 123 via the second space 129 and is ejected to outside of the chamber 121. When a pulsed high voltage is applied to the discharge electrode 13 from the discharge power source 11 in a state in which a sample gas flow is formed in this manner, corona discharge occurs between the vicinity of the tip of the discharge electrode 13 and the ground electrode 124. Carrier gas such as atmospheric air included in the sample gas is ionized by the corona discharge. The polarity of ions generated at this time depends on the polarity of the voltage applied to the discharge electrode 13.

Because the ions generated in this manner are present with a high density between the ground electrode 124 and the baffle plate 125, aerosols that are carried by the sample gas and introduced contact with the ions and receive charges from the ions to thereby take a charge. The charged aerosols generated in this way are carried on the flow of the sample gas and pass through the second space 129, the sample gas discharge pipe 123 and the pre-classification particle conveyance flow passage 14, and are supplied to the classification unit 32 of the DMA 3 as described above.

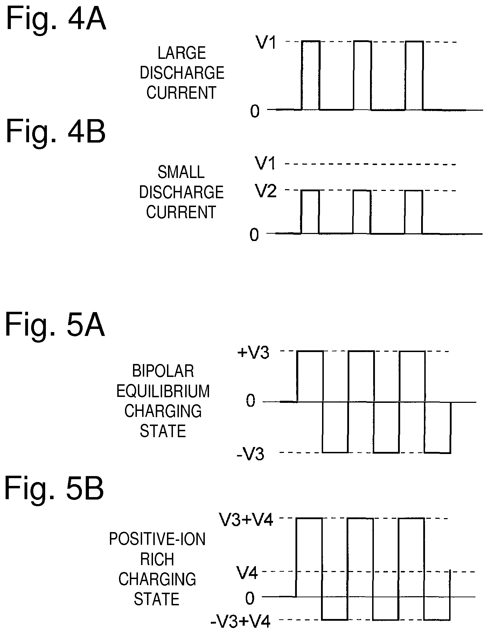

In the aerosol particle size distribution measurement device of the present embodiment, the discharge power source 11 in the charging unit 1 is a unipolar-type power source of positive polarity or negative polarity, and applies a pulsed high voltage of positive polarity as illustrated in Fig. 4A to the discharge electrode 13. By this means, positive ions are generated in the chamber 121, and the aerosols become positively charged. Naturally, the aerosols may be negatively charged by application of a pulsed high voltage of negative polarity to the discharge electrode 13. In the DMA 3, it is sufficient to change the polarity of the classification voltage in accordance with the polarity of a charged aerosol that is a classification object.

In this case, although it is preferable that only univalent charged aerosols are generated in the charging unit 1 in order to accurately determine the particle size distribution, in practice a considerable number of multivalent charged aerosols that have a valence of two or more are generated. In particular, in the case of unipolar charging, multivalent charges relatively easily occur.

The present inventors investigated through experiment the relation between the discharge current and the valence number distribution of charged aerosols generated by electrical discharge in a unipolar charging device that uses corona discharge as described above. In the experiment, NaCl particles with particle sizes of 27 nm and 38 nm were used as the particles to be charged. As an experiment method, particles were generated by an NaCl generator, the particles were subjected to bipolar equilibrium charging using americium, and thereafter only univalent charged particles of each particle size were extracted with the DMA. The charged particles were then introduced into a corona discharge-type unipolar charging device and electrically charged, and after being separated according to each valence with the DMA, for particle concentration for each valence was measured by a condensation particle counter. At this time, in the DMA at a subsequent stage, particles extracted when classification voltages with respect to particles passed through the corona discharge-type unipolar charging device that did not discharge (that is, did not electrically charge) were set to 1/2, 1/3 and 1/4 were measured as particles univalently charged, particles divalently charged, and particles trivalently charged with the corona discharge-type unipolar charging device, respectively. Note that, in this experiment, because univalent particles of each particle size, that is, particles already charged to have a valence of 1, were introduced into the corona discharge-type unipolar charging device, each valence is considered taking the particles having the valance of 1 as a standard.

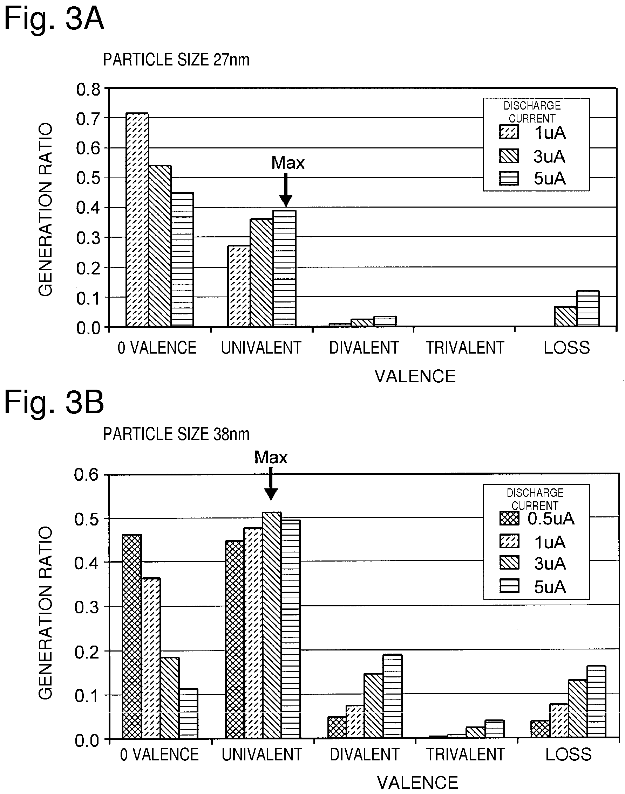

With respect to the particles with a particle size of 27 nm, the valence number distribution of the respective particles when the discharge current value was changed between the three levels of 1 µA, 3 µA and 5 µA is shown in Fig. 3A. Further, with respect to the particles with a particle size of 38 nm, the valence number distribution of the respective particles when the discharge current value was changed between the four levels of 0.5 µA, 1 µA, 3 µA and 5 µA is shown in Fig. 3B.

For the aforementioned reason, in Fig. 3A and Fig. 3B, the valence of univalent particles introduced into the corona discharge-type unipolar charging device is shown as 0 valence. Referring to Fig. 3A, with regard to the particles with a particle size of 27 nm, it is found that the generated amount of univalent charged particles is a maximum when the discharge current is 5 µA, that is, the charging efficiency is highest. In contrast, with respect to the particles with a larger particle size of 38 nm, it is found that the generated amount of univalent charged particles when the discharge current is 5 µA is less than the generated amount thereof when the discharge current is 3 µA, and the charging efficiency is highest when the discharge current is 3 µA. According to the results of this experiment, when considering only the univalent charging efficiency, it can be said that a discharge current of 5 µA is preferable in the case of particles with a particle size of 27 nm, and a discharge current of 3 µA is preferable in the case of particles with a particle size of 38 nm. As will be understood from viewing Fig. 3B, if the particle size is large, when the discharge current is increased to a certain value or more, although the multivalent charging efficiency increases, conversely, the univalent charging efficiency decreases. It was thus found that to achieve the best univalent charging efficiency, it is necessary to appropriately set the discharge current in accordance with the particle size. Further, it was found that to achieve the best univalent charging efficiency, it is necessary to decrease the discharge current for particles with a large particle size in comparison to particles with a small particle size.

This is suitable when only univalent charging efficiency is attended and it is desired to supply large amount of univalent charged aerosols as much as possible to the DMA 3 to increase the measurement sensitivity. In a case where it is desired to improve the accuracy of particle size distribution measurement, it is necessary to enhance the signal-to-noise ratio by taking into consideration the mixture of particles of a different size that cannot be distinguished by utilizing electrical mobility. For example, assuming that an object of classification in the DMA is univalent charged particles with a particle size of 27 nm, because trivalent charged particles with a particle size of 38 nm also have almost the same electrical mobility as the univalent charged particles with a particle size of 27 nm, it is not possible to distinguish between the different-sized particles. In other words, assuming that the univalent charged particles with a particle size of 27 nm are the signal, the trivalent charged particles with a particle size of 38 nm will be noise. Accordingly, even if the number of univalent charged particles with a particle size of 27 nm increases, if the percentage increase in the trivalent charged particles with a particle size of 38 nm is equal to or greater than the increase in the univalent charged particles with a particle size of 27 nm, the signal-to-noise ratio will decrease. With regard to the results of the experiment shown in Fig. 3A, when the signal-to-noise ratio was calculated from such a viewpoint, it was revealed that the discharge current at which the signal-to-noise ratio is best is 1 µA.

To summarize the experimental results described above, a discharge current of 5 µA is appropriate in the case of a condition of achieving the best charging efficiency for univalent charging of particles with a particle size of 27 nm, a discharge current of 3 µA is appropriate in the case of a condition of achieving the best charging efficiency for univalent charging of particles with a particle size of 38 nm, and a discharge current of 1 µA is appropriate in the case of a condition of achieving the best signal-to-noise ratio with respect to extracting univalent charged particles with a particle size of 27 nm. It can be said that, because the charging efficiency, that is, which value among the absolute amount of signals and the signal-to-noise ratio of signals to attach importance to, depends on the measurement purpose and the like, it is desirable to not merely change the discharge current according to the particle size of the particles that is desired to extract, but to change the discharge current in accordance with the measurement purpose and the like.

In the case of a unipolar discharge, the discharge current amount can be adjusted by changing a pulse peak value of the discharge voltage (V1 in Fig. 4A, V2 in Fig. 4B). Further, if the device structure is decided, the relation between particle sizes of particles that are charging objects and an optimum pulse peak value of discharge voltage in consideration of each of the absolute amount of signals and the signal-to-noise ratio of signals can be determined in advance through experiment. Therefore, the manufacturer of the present device, for example, determines such relation in advance, converts the relation into data, that is, as a table or a formula or the like, and stores the data in the optimal voltage information storage unit 21. Thus, when the particle size of aerosols as a charging object is given, the system controlling unit 2 refers to information in the optimal voltage information storage unit 21 to obtain a voltage value that corresponds to the relevant particle size, and instructs the discharge voltage controlling unit 10 to use the determined voltage value. A configuration may also be adopted in which the discharge voltage controlling unit 10 holds the optimal voltage information storage unit 21, and in such a case, when the system controlling unit 2 issues an instruction regarding the particle size to the discharge voltage controlling unit 10, the discharge voltage controlling unit 2 refers to the information of the optimal voltage information storage unit 21 to obtain a voltage value corresponding to the relevant particle size, and controls the discharge power source 11 so that a voltage of the relevant voltage value is generated.

Further, as described above, an optimal voltage for particles with a certain particle size will differ depending on whether importance is to be placed on the absolute amount of signals or on the signal-to-noise ratio of signals. Therefore, at least two modes of a signal amount priority mode and a signal quality priority mode are prepared as a charging mode in the present device, and it is possible for the analyst to select either of these modes using the input unit 5. When the signal amount priority mode is selected, the system controlling unit 2 (or the discharge voltage controlling unit 10) uses an optimal voltage that is determined so that univalent charging efficiency becomes the best charging efficiency, and when the signal quality priority mode is selected, the system controlling unit 2 (or the discharge voltage controlling unit 10) uses an optimal voltage that is determined so that the signal-to-noise ratio becomes the best signal-to-noise ratio. By this means, appropriate charging can be performed in accordance with the measurement purpose or differences in the kind of analysis at a subsequent stage (for example, in a case of using another detector or the like).

As described above, in a case of scanning the classification voltage in order to change the electrical mobility of charged aerosols to be extracted at the classification unit 32 of the DMA 3, the system controlling unit 2 controls each of the classification voltage controlling unit 30 and the discharge voltage controlling unit 10 so that the discharge voltage in the charging unit 1 changes in conjunction with scanning of the classification voltage in the DMA 3. That is, if it is desired to extract charged aerosols having electrical mobility (univalent charging is assumed) that corresponds to a certain particle size at a certain time point in the classification unit 32, to ensure that the relevant charged aerosols are supplied at the relevant time point to the classification unit 32 in a large amount or in a state in which there are few charged aerosols of a different size, it is necessary to change the voltage so that the charging efficiency or the signal-to-noise ratio of the relevant aerosols is high in the charging unit 1 at a time point that precedes the relevant time point by a predetermined time period. The predetermined time period must be none other than the time period during the charged aerosols move from the particle charging unit 12 to the classification unit 32 through the pre-classification particle conveyance flow passage 14.

The aforementioned movement time depends on the internal volume of flow passages including the pre-classification particle conveyance flow passage 14 and the flow rate (or flow velocity) of the sample gas that carries the charged aerosols, and the former is previously determined by the device structure. Meanwhile, the latter is one of the parameters input by the analyst inputs from the input unit 5 when performing the measurement. Therefore, when the flow rate (or flow velocity) of the sample gas is set from the input unit 5, the delay time calculation unit 20 in the system controlling unit 2 calculates a movement time of the sample gas based on the set flow rate (or flow velocity) value and the predetermined internal volume of the flow passage. The delay time calculation unit 20 then controls the respective controlling units 10 and 30 so that scanning of the classification voltage is delayed relative to a change in, that is, scanning of, the discharge voltage by the movement time. In a case where the flow rate (or flow velocity) of the sample gas is changed, because the delay time calculation unit 20 recalculates the movement time each time the flow rate (or flow velocity) changes, scanning of the discharge voltage can be appropriately linked with scanning of the classification voltage without being influenced by the flow rate or the like of the sample gas.

Note that, although in the above description of the embodiment a configuration is described in which the discharge power source 11 is a power source that generates either of a positive voltage or a negative voltage, and unipolar charging is performed at the charging unit 1, a configuration can also be adopted in which a power source that generates a voltage of both positive and negative polarities is used as the discharge power source 11, and bipolar charging is performed at the charging unit 1.

In a case of performing bipolar equilibrium charging in the charging unit 1, the discharge power source 11 applies positive and negative pulsed voltages in which a pulse peak value is the same (V3) for the positive polarity and negative polarity as shown in Fig. 5A to the discharge electrode 13. At this time, charges of equilibrium charge distribution are given to the charged aerosols. If a direct current bias voltage of such pulsed voltages of both positive and negative polarities is made variable, as shown in Fig. 5B, applying a direct current bias voltage of positive polarity leads to a positive-ion rich state in which many positive ions are generated in comparison to negative ions in the particle charging unit 12. Conversely, applying a direct current bias voltage of negative polarity leads to a negative-ion rich state many negative ions are generated in comparison to positive ions in the particle charging unit 12.

For example, in a state in which there is an excess of positive ions in comparison to negative ions, because there are more opportunities for aerosols to contact positive ions than opportunities for aerosols to contact negative ions, the amount of aerosols that are positively charged will be greater than the amount of aerosols that are negatively charged. That is, at this time, charges of non-equilibrium charge distribution are given to the charged aerosols. As the direct current bias voltage V4 of positive polarity is enlarged from 0, the excess amount of positive ions gradually increases, and the amount of charged aerosols of positive polarity increases accordingly. In this case also, similarly to the above described case of unipolar charging, because there is an optimal value of the direct current bias voltage in accordance with the particle size, similar actions and effects as in the above described embodiment can be achieved by adjusting or scanning the direct current bias voltage value instead of the peak value of the pulsed voltage.

Further, the pulsed voltage waveform may be simply shifted to in a positive direction or a negative direction without changing the pulsed voltage waveform itself by changing the direct current bias voltage in this way, and alternatively the amount of ions that are effective for generating charged aerosols that are the classification object by changing the discharge power ratio between the positive and negative power because the amount of positive ions and amount of negative ions that are generated by corona discharge depend on the discharge power to be fed. Although in the case illustrated in Fig. 5A the discharge power ratio between the positive and negative power is 1:1, the discharge power ratio between the positive and negative power can be appropriately shifted from 1:1 by, for example, changing the peak value of the pulsed voltage waveform of either one of the positive and negative pulsed voltages, or changing the pulse width (time width) without changing a peak value. Similar actions and effects as in the above described embodiment can be achieved by such voltage control also.

Further, a configuration may also be adopted that enables the selective utilization of bipolar equilibrium charging Justin addition to the aforementioned unipolar charging and bipolar non-equilibrium charging. As described above, although in the case of bipolar equilibrium charging the charging efficiency with respect to small-sized particles is low and bipolar equilibrium charging is also inferior to unipolar charging with respect to large-sized particles, bipolar equilibrium charging can obtain an adequate charging efficiency to a certain extent and, furthermore, produces fewer multivalent charges. In addition, the reproducibility of the charging efficiency with respect to particle size is high. For these reasons, a configuration may be adopted so as to, for example, perform control that applies bipolar equilibrium charging for aerosols with a certain particle size or larger and applies unipolar charging or bipolar non-equilibrium charging for aerosols with a particle size that is less than the certain particle size.

Further, although in the above described embodiment an ion source that is based on corona discharge is utilized in the charging unit 1, electric discharge other than corona discharge, for example, arc discharge, spark discharge, dielectric barrier discharge or atmospheric pressure glow discharge can also be utilized. However, it is necessary to change the voltage application method according to the kind of electric discharge. For example, in the case of performing unipolar charging using the arc discharge or the spark discharge, similarly to the aforementioned corona discharge, a pulsed voltage from a unipolar power source of either positive polarity or negative polarity may be applied to the discharge electrode. On the other hand, when it is desired to perform unipolar charging using the dielectric barrier discharge or the atmospheric pressure glow discharge, it is possible to generate substantially unipolar ions and generate charged aerosols of either positive or negative polarity by applying to the discharge electrode an alternating-current voltage to which a large direct current bias voltage was applied, and not applying a voltage in the manner of corona discharge.

It should be noted that the above described embodiment is merely an example of the present invention, and it is evident that any modification, adjustment, or addition or the like appropriately made within the spirit of the present invention is also included in the scope of the claims of the present application.

### REFERENCE SIGNS LIST

- 1 ...: Charging Unit
- 10 ...: Discharge Voltage Controlling Unit
- 11 ...: Discharge Power Source
- 12 ...: Particle Charging Unit
- 121 ...: Chamber
- 122 ...: Sample Gas Introduction Pipe
- 123 ...: Sample Gas Discharge Pipe
- 124 ...: Ground Electrode
- 124a, 124b ...: Vent Hole
- 124c ...: Partition Wall Portion
- 125 ...: Baffle Plate
- 125a ...: Circular Opening
- 126...: Ammeter
- 127 ...: Voltmeter
- 128 ...: First Space
- 129 ...: Second Space
- 13 ...: Discharge Electrode
- 2 ...: System Controlling Unit
- 20 ...: Delay Time Calculation Unit
- 21 ...: Optimal Voltage Information Storage Unit
- 3 ...: DMA
- 30 ...: Classification Voltage Controlling Unit
- 31 ...: Classification Power Source
- 32 ...: Classification Unit
- 321 ...: Outer Cylinder Unit
- 322 ...: Inner Cylinder Unit
- 323 ...: Slit
- 33 ...: Sheath Flow Rate Controlling Unit
- 34 ...: Filter
- 35 ...: Sheath Flow Rate Adjustment Unit
- 36, 38 ...: Buffer Tank
- 37 ...: Pump
- 4 ...: Particle Measurement Unit
- 40 ...: Particle Counting Unit
- 41 ...: Sample Flow Rate Adjustment Unit
- 42 ...: Pump
- 43 ...: Sample Flow Rate Controlling Unit

## Claims

1. A particle charging device that, to generate charged particles to be provided for classification of particles in a gas utilizing electrical mobility, ionizes a predetermined gas by electrical discharge generated from a discharge electrode, and causes the ions and particles that are charging objects to contact to electrically charge the particles, comprising:
a) a discharge voltage application unit that applies a voltage for causing electrical discharge to the discharge electrode, and
b) a discharge controlling unit that controls the discharge voltage application unit to change a voltage that is applied to the discharge electrode so as to adjust a concentration of ions that are generated by the electrical discharge and contribute to charging of particles in accordance with a particle size of charged particles taken as a target.

2. The particle charging device according to claim 1, wherein:
to perform unipolar charging, the discharge voltage application unit generates ions of positive polarity or negative polarity by electrical discharge by applying a voltage of positive polarity or negative polarity to the discharge electrode, and
the discharge controlling unit controls the discharge voltage application unit to change an amplitude of the voltage of positive polarity or negative polarity.

3. The particle charging device according to claim 1, wherein:
to perform bipolar charging in which charge distribution is equilibrium distribution or non-equilibrium distribution, the discharge voltage application unit generates ions of positive polarity and negative polarity by electrical discharge by applying an alternating-current voltage of both positive and negative polarities on which a direct current bias voltage is superimposed to the discharge electrode, and
the discharge controlling unit controls the discharge voltage application unit to change the direct current bias voltage.

4. The particle charging device according to claim 1, wherein:
to perform bipolar charging in which charge distribution is equilibrium distribution or non-equilibrium distribution, the discharge voltage application unit generates ions of positive polarity and negative polarity by electrical discharge by alternately applying a voltage of positive polarity and a voltage of negative polarity to the discharge electrode, and
the discharge controlling unit controls the discharge voltage application unit to change a ratio between a discharge power produced by application of the voltage of positive polarity and a discharge power produced by application of the voltage of negative polarity.

5. The particle charging device according to claim 1, comprising:
as the discharge voltage application unit, two voltage application units that are used for applying a positive voltage and applying a negative voltage, wherein positive electrode discharge is performed by voltage application from the voltage application unit for applying the positive voltage, and negative electrode discharge is performed by voltage application from the voltage application unit for applying the negative voltage, and the discharge controlling unit controls the two voltage application units to change a power ratio between the two voltage application units.

6. The particle charging device according to any one of claims 2 to 5, wherein:
to perform bipolar equilibrium charging, the discharge voltage application unit generates both ions of positive polarity and ions of negative polarity by electrical discharge by applying a voltage of positive polarity and a voltage of negative polarity that are in positive and negative symmetry to the discharge electrode, and
the discharge controlling unit controls the discharge voltage application unit to generate a voltage that enables bipolar equilibrium charging, in place of unipolar charging or bipolar charging in which charge distribution is non-equilibrium charge distribution.

7. The particle charging device according to any one of claims 1 to 6, wherein:
the discharge controlling unit has a signal amount priority mode and a signal quality priority mode as two charging modes that are switchable,
in the signal amount priority mode, the discharge controlling unit controls the discharge voltage application unit to apply to the discharge electrode a voltage that is previously determined so that a generated amount of charged particles with a valence of one becomes a maximum with respect to a particle size of charged particles taken as a target, and
in the signal quality priority mode, the discharge controlling unit controls the discharge voltage application unit to apply to the discharge electrode a voltage that is previously determined so that a signal-to-noise ratio that is determined based on a relation between a generated amount of charged particles with a valence of one with respect to a particle size of charged particles taken as a target and a generated amount of noise when other charged particles with a particle size that is different to the charged particles but for which electrical mobility is equal to the charged particles because of having a multivalent charge of two or more are regarded as the noise becomes a maximum.

8. A particle classification device that uses the particle charging device according to any of claims 1 to 7, comprising:
c) a classification electrode that forms an electric field for classifying the charged particles according to electrical mobility;
d) a classification voltage application unit that applies a classification voltage to the classification electrode;
e) a classification controlling unit that controls the classification voltage application unit to change a classification voltage in accordance with a particle size for which measurement is desired; and
f) an integrated controlling unit that, when changing a classification voltage by means of the classification controlling unit, links control by the classification controlling unit with control by the discharge controlling unit or controls operations of both of the controlling units so that a voltage applied to the discharge electrode changes in response to the change in the classification voltage.

9. The particle classification device according to claim 8, wherein:
the integrated controlling unit includes a delay time estimation unit that estimates a time taken for charged particles to move from a charging region in which particles are charged in the particle charging device to a classification region in which an electric field is formed by the classification electrode, and controls the classification controlling unit and the discharge controlling unit, taking into account the time estimated by the delay time estimation unit, so that a change in a classification voltage and a change in a discharge voltage link with each other.

10. The particle classification device according to claim 9, wherein:
the delay time estimation unit estimates the time taken for charged particles to move, based on a flow rate or a flow velocity of a gas that carries charged particles from the charging region to the classification region and an internal volume of a flow passage that is previously determined.
